# EUROPEAN PATENT APPLICATION

(11) **EP 4 475 242 A2**
(43) Date of publication of application: **11.12.2024**
(21) Application number: 24163920.2
(22) Date of filing: 15.03.2024
(51) Int. Cl.: H01M 10/04

(54) **APPARATUS FOR REMOVING RELEASE PAPER AND METHOD OF REMOVING RELEASE PAPER USING SAME**

(30) Priority: 15.05.2023 KR 20230062665
(71) Applicant: SK On Co., Ltd., Seoul 03161 (KR)
(72) Inventor: KIM, Wook Hyun, 34124 Daejeon (KR); KIM, Kwan Yong, 34124 Daejeon (KR); CHANG, Yun U, 34124 Daejeon (KR)
(74) Representative: Stolmár & Partner Patentanwälte PartG mbB

(57) **Abstract**

Proposed is an apparatus for removing release paper, the apparatus including a removal part that grips and removing release paper attached to a surface of a battery cell and is provided with a gripping detection sensor, a recovery part that collects the release paper removed from the surface of the battery cell and is provided with an input detection sensor, and a detection part that detects the release paper remaining not removed by performing vision measurement on the surface of the battery cell. In addition, proposed is a method of removing release paper from a battery cell using the above-described apparatus, while determining a removal state of the release paper.

## Description

### CROSS REFERENCE TO RELATED APPLICATION

The present application claims priority to Korean Patent Application No. 10-2023-0062665, filed May 15, 2023, the entire contents of which is incorporated herein for all purposes.

### BACKGROUND OF THE INVENTION

### Field of the Invention

The present disclosure relates generally to an apparatus for removing release paper. More specifically, the present disclosure relates to an apparatus for removing release paper for a secondary battery, the apparatus being configured to remove release paper attached to a battery cell and determine a removal state of the release paper.

In addition, the present disclosure also relates to a method of removing release paper attached to a battery cell.

### Description of the Related Art

Secondary batteries are batteries which can be repeatedly charged and discharged. The secondary batteries are widely used in various fields such as various mobile devices, electric vehicles (EVs), hybrid vehicles (HEVs), and energy storage systems (ESSs). As technology continues to advance, secondary battery models that are more compact and can output more power are under development.

Depending on the shape of an outer casing in which an electrode assembly is accommodated, the secondary batteries may be classified into a cylinder type, a prismatic type, and a pouch type. Recently, the demand for thin pouch-type secondary batteries has been increased.

In order to realize high-capacity secondary batteries, pouch-type secondary batteries may be constructed by connecting a plurality of unit battery cells in series and/or parallel to form a battery module. In general, a plurality of battery cells of a battery module are arranged in a predetermined space to be in contact with each other in one direction. To this end, a double-sided tape may be interposed between the battery cells to maintain alignment between the battery cells. In addition, since the plurality of battery cells are densely packed, a pad that provides functions such as preventing heat transfer, insulating, and buffering may be disposed between the battery cells.

As described above, in order to assemble a battery cell to another battery cell in surface contact with each other by the double-sided tape or pad stacked on a surface of the battery cell, release paper attached to an outer surface of the double-sided tape or pad has to be removed. For example, as disclosed in FIG. 9 of Patent Document 1, release paper is removed through a change in the position of a removal part. When battery cells are stacked with release paper not completely removed, complete assembly cannot be achieved due to slipping between the battery cells.

Accordingly, there is a need for a method to confirm removal of release paper on a surface of a battery cell to which double-sided tape or pad is attached. To meet this demand, various attempts have been made, but satisfactory results have not been obtained yet.

The foregoing is intended merely to aid in the understanding of the background of the present disclosure, and is not intended to mean that the present disclosure falls within the purview of the related art that is already known to those skilled in the art.

### Documents of Related Art

(Patent document 1) Korean Patent Application Publication No. 10-2022-0009155

### SUMMARY OF THE INVENTION

Accordingly, the present disclosure has been made keeping in mind the above problems occurring in the related art, and an objective of the present disclosure is to provide an apparatus for removing release paper for a secondary battery, the apparatus being capable of reliably removing release paper attached to a battery cell, and provide a method of removing release paper using the apparatus.

Another objective of the present disclosure is to detect whether release paper remains using the above-described apparatus.

In order to achieve the above objectives, according to one aspect of the present disclosure, there is provided an apparatus for removing release paper, the apparatus including: a removal part including a gripper configured to grip and remove release paper attached to a surface of a battery cell, and a gripping detection sensor provided on the gripper and configured to detect gripping of the release paper.

The apparatus may further include: a detection part configured to detect the release paper remaining not removed on the surface of the battery cell.

Preferably, the detection part may include one or more vision cameras configured to capture the entire surface of the battery cell.

The apparatus may further include: a recovery part configured to recover the release paper removed from the surface of the battery cell.

Preferably, the recovery part may include: an inlet having an open structure that allows the removed release paper to be input therethrough; and an input detection sensor provided at the inlet and configured to detect input of the removed release paper.

In an embodiment, the gripper may include: a pair of fingers configured to grip and release the release paper, a light emitting element located on one of the pair of fingers; and a light receiving element located on the remaining one of the pair of fingers and configured to receive light emitted from the light emitting element.

In addition, the release paper may include a gripping protrusion extending outwardly from an edge of the release paper, and an intersection area between the release paper and the gripping protrusion may be formed to be rounded.

The apparatus may further include: a transfer carrier configured to be movable by mounting the battery cell thereon.

According to another aspect of the present disclosure, there is provided a method of removing release paper, the method including: removing release paper attached to a surface of a battery cell by gripping the release paper with a gripper; and determining whether the release paper is gripped through the gripper.

The method may further include: after the removing of the release paper, recovering the release paper removed from the surface of the battery cell; and determining whether the removed release paper is input into a recovery part.

The method may further include: after the removing of the release paper, performing vision measurement on the surface of the battery cell; and comparing a reference image of the surface of the battery cell with the release paper completely removed and a comparative image obtained in the performing of the vision measurement to determine whether the images match each other.

The features and advantages of the present disclosure will be more clearly understood from the following detailed description when taken in conjunction with the accompanying drawings.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

According to the present disclosure described above, it is possible to achieve removal of release paper attached to a battery cell, recovery of release paper, and detection of unremoved release paper.

That is, it is possible to accurately determine a removal state of the release paper from the battery cell with a simple configuration and improve reliability of a removal process.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a configuration view schematically illustrating an apparatus for removing release paper according to the present disclosure;
FIG. 2 is a view schematically illustrating a state in which release paper of a battery cell is gripped using a gripper of the apparatus for removing the release paper according to the present disclosure;
FIG. 3 is a configuration view schematically illustrating an apparatus for removing release paper according to the present disclosure; and
FIG. 4 is a flowchart illustrating a method of removing release paper according to the present disclosure.

### DETAILED DESCRIPTION OF THE INVENTION

The objectives, advantages, and features of the present disclosure will be more clearly understood from the following detailed description taken in conjunction with the accompanying drawings. However, the present disclosure is not limited to the below-described embodiments. Further, it is to be noted that, when the functions of conventional elements and the detailed description of elements related with the present disclosure may make the gist of the present disclosure unclear, a detailed description of those elements will be omitted.

The embodiments described herein and the accompanying drawings are not intended to limit the present disclosure to specific embodiments. It should be understood that the present disclosure covers various modifications, equivalents, and/or alternatives of the embodiments.

As for reference numerals associated with parts in the drawings, the same reference numerals will refer to the same or like parts throughout the drawings.

It will be understood that, although the terms "first", "second", etc. may be used only to distinguish one element from another element, these elements should not be limited by these terms. In the drawings, some components are exaggerated, omitted, or schematically illustrated, and the size of each component does not exactly reflect its real size.

Hereinbelow, an exemplary embodiment of the present disclosure will be described in detail with reference to the accompanying drawings.

The present disclosure relates to an apparatus for removing release paper attached to a battery cell. In other words, release paper can be removed from a double-sided tape or pad attached to a surface of a battery cell, which is a pouch-type secondary battery.

Preferably, the present disclosure is configured to detect not only whether the release paper is removed but also whether the release paper remains.

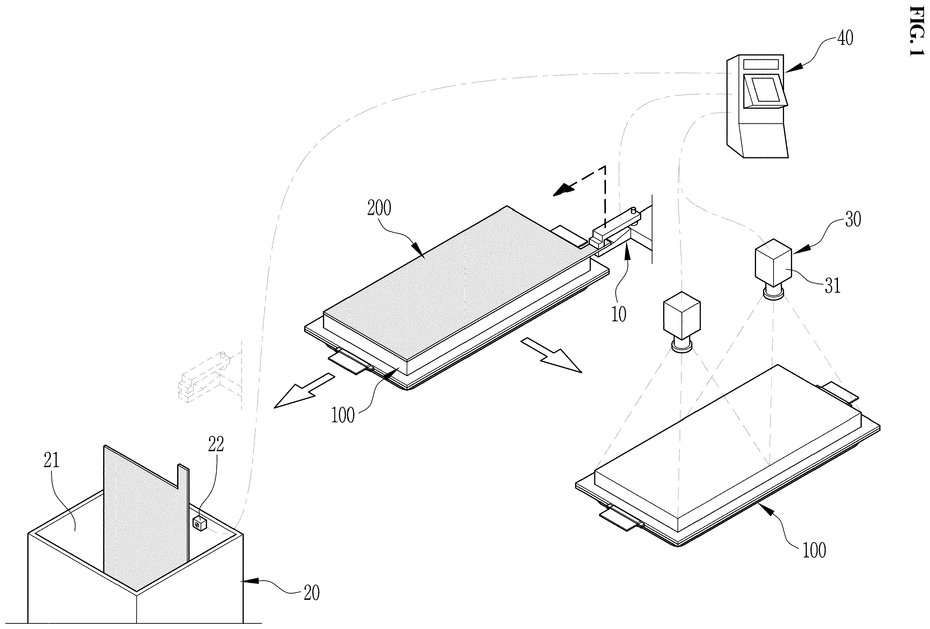

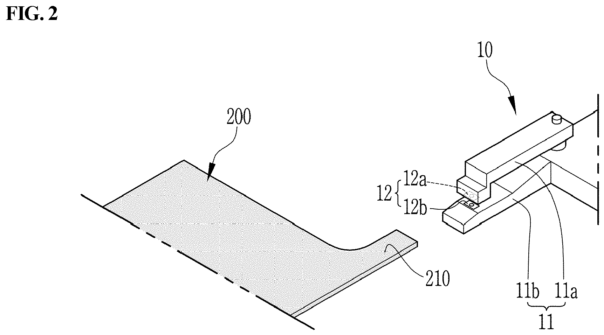

Referring to FIGS. 1 and 2, the apparatus for removing the release paper according to the present disclosure includes a removal part 10 removing release paper 200 attached to a battery cell 100, a recovery part 20 recovering the release paper removed from the battery cell 100, and a detection part 30 determining whether the release paper remains on the battery cell 100. Specifically, the release paper 200 may be attached to a surface of a battery cell for a pouch-type secondary battery.

In addition, the apparatus for removing the release paper according to the present disclosure may include a gripping detection sensor 12 of the removal part 10, an input detection sensor 22 of the recovery part 20, and/or a controller 40 processing and analyzing data transmitted from a vision camera 31 of the detection part 30.

During a mini-stack process of stacking a plurality of battery cells 100 packaged with a pouch casing release paper 200 attached to a surface of each battery cell 100 has to be removed. Here, it may be understood that the release paper 200 is attached to an outer surface of a double-sided tape or pad applied to the surface of the battery cell 100.

In general, a pouch casing may include: a sealing portion (not indicated by reference numerals) forming an inner space with ends of electrode tabs extending to the outside, and formed by facing an upper pouch surrounding an upper side of an electrode assembly and a lower pouch surrounding a lower side of the electrode assembly and then sealing edges of the upper and lower pouches by thermal fusion; and an accommodating portion (not indicated by reference numerals) providing an inner space for accommodating the electrode assembly and an electrolyte solution between the upper pouch and the lower pouch disposed spaced apart from each other inside the sealing portion. In other words, release paper may be stacked and attached on an accommodating portion of a pouch-type secondary battery. It is noted that the illustration of a double-sided tape and/or pad is omitted to clarify the gist of the present disclosure.

As is widely known to those skilled in the art, release paper that remains not removed on a battery cell may cause a slipping phenomenon on a surface of the battery cell, causing a plurality of battery cells to become misaligned when they are stacked.

The apparatus according to the present disclosure may remove the release paper 200 attached to the surface of the battery cell 100 using the removal part 10. As illustrated, the removal part 10 may grip and transfer the release paper 200 attached to the surface of the battery cell 100 and guide the release paper 200 to the recovery part 20.

The removal part 10 includes a gripper 11 having a pair of fingers 11a and 11b operable to grip and release the release paper 200, and the gripping detection sensor 12 detecting whether the release paper 200 is present between the pair of fingers 11a and 11b. The gripping detection sensor 12 may be a sensor installed on a part that grips the release paper 200 to detect whether the release paper 200 is gripped through the gripper 11. The gripping detection sensor 12 includes a light emitting element 12a located at an end of the first finger 11a, and a light receiving element 12b located at an end of the second finger 11b and disposed to face the light emitting element 12a to receive light emitted from the light emitting element 12a. Of course, in the present disclosure, the light emitting element 12a may be disposed at the end of the second finger 11b and the light receiving element 12b may be disposed at the end of the first finger 11a. The gripping detection sensor 12 may detect whether the release paper 200 is gripped between the pair of fingers 11a and 11b on basis of the light received by the light receiving element 12b and provide the information to the controller 40. When the release paper 200 is located between the pair of fingers 11a and 11b of the gripper 11, it possible to detect whether the release paper 200 is gripped by the gripper 11 by blocking an optical path between the light emitting element 12a and the light receiving element 12b with the release paper 200.

In addition, the removal part 10 may include a transfer unit (not illustrated) transferring the gripper 11 on the battery cell 100 in a removal direction in which the release paper 200 is removed from the battery cell 100. The transfer unit moves the position of the gripper 11 gripping the release paper 200 attached to the surface of the battery cell 100 in the removal direction to remove the release paper 200 from the battery cell 100 and helps to collect the removed release paper 200 into the separate recovery part 20. In the present disclosure, the transfer unit may be provided in any configuration as long as the position of the gripper 11 can be varied in the vertical direction, the horizontal direction, or a combination thereof.

The release paper 200 is provided with a gripping protrusion 210 around the edge of the release paper 200 so that the release paper 200 is easily gripped by the gripper 11 of the removal part 10. The gripping protrusion 210 extends outwardly from the edge of the release paper 200, is an area where an adhesive material is not applied, and protrudes a predetermined distance outwardly from the surface of the battery cell 100.

As illustrated, the gripping protrusion 210 is formed to have a smaller width than the release paper 200 so that the gripping protrusion 210 is gripped by the gripper 11 of the removal part 10 and easily removed from the battery cell 100.

In the process of forcibly pulling and removing the release paper 200 while the gripper 11 is moved in the removal direction by the transfer unit, stress may be concentrated at the intersection area between the release paper 200 and the gripping protrusion 210. That is, when external force is applied by the gripper 11, cracks generated at the intersection area may cause the release paper 200 to be torn, and the tom release paper 200 may stick to the surface of the battery cell 100 and may not be removed properly. To prevent the above problem, the intersection area between the release paper 200 and the gripping protrusion 210 may be formed to be rounded to relieve stress concentration and improve durability.

The removed release paper 200 may be guided to the recovery part 20 by the removal part 10 and then input into the recovery part 20 through an inlet 21. The gripper 11 may release the removed release paper 200 from a gripped state and supply the release paper 200 to the preset recovery part 20.

Preferably, as illustrated, the input detection sensor 22 of the recovery part 20 is disposed at the inlet 21 opened upwardly. The input detection sensor 22 detects whether the release paper 200 is input into the recovery part 20 through the input 21 and provides the information to the controller 40. After input, the apparatus for removing the release paper according to the present disclosure may re-determine whether the release paper 200 is separated from between the pair of fingers 11a and 11b through the gripping detection sensor 12 of the removal part 10.

The input detection sensor 22 may be an optical sensor that is composed of a light emitting element and a light receiving element similar to the above-described gripping detection sensor 12 and used to determine whether release paper, specifically removed release paper, is input. Of course, the input detection sensor 22 may be replaced with various known sensors.

Optionally, the apparatus for removing the release paper according to the present disclosure may further include a load cell (not illustrated) installed under the recovery part 20 and measuring the weight of the release paper 200 loaded in the recovery part 20 after being released from the gripper 11. In the present disclosure, information on whether the release paper 200 passes through the inlet 21 may be obtained by the input detection sensor 22, and information on the weight of the release paper 200 input into the recovery part 20 may be detected by the load cell. The received weight data may be compared and checked with preinput weight data of standard release paper to determine whether the release paper 200 removed from the battery cell 100 and the standard release paper match each other and thereby determine whether the release paper 200 is completely removed from the surface of the battery cell 100.

The apparatus for removing the release paper according to the present disclosure includes the detection part 30 detecting release paper 200 that remains not removed in the process of removing the release paper 200 attached to the surface of the battery cell 100 through the operation of the removal part 10.

Preferably, in the present disclosure, the detection part 30 may be located downstream of the removal part 10 to perform vision measurement on the surface of the battery cell 100 to be inspected after removal of the release paper 200.

As illustrated, the vision camera 31 of the detection part 30 is disposed above the surface of the battery cell 100. Here, one or more vision cameras 31, preferably two or more vision cameras 31, are provided.

In addition, in the present disclosure, the entire surface of the battery cell 100 from which the release paper 200 is removed may be captured by the vision cameras 31. To this end, in the present disclosure, two vision cameras 31 are arranged in the lengthwise direction of the battery cell 100. Here, a first vision camera may capture a portion of the battery cell 100, while the second vision camera may capture the remaining portion of the battery cell 100.

On the other hands, in the present disclosure, two vision cameras may be arranged in a moving direction of the battery cell 100 to obtain stereotype images of the surface of the battery cell 100 to be inspected. That is, the two vision cameras may sequentially obtain images of the surface of the battery cell 100.

As described above, the present disclosure employs a vision camera as a means to obtain an image of the battery cell 100, but is not limited thereto, and any configuration is possible as long as it can capture the surface of the battery cell 100, such as infrared ray, X-ray, or computer tomography (CT).

In the present disclosure, a reference image and a comparative image of an inspection object may be captured through the detection part 30 above the surface of the battery cell 100. Here, the "inspection object" may be the surface of the battery cell 100 to which the release paper 200 is attached. The "comparative image" is an image obtained by directly capturing the inspection object, and shows the actual surface shape of the inspection object. The "reference image" is an image representing the ideal surface shape that the inspection object has to have, and may be an image showing the surface of the battery cell 100 from which the release paper 200 is completely removed. In other words, the reference image serves as a practical standard for comparative images of each inspection object.

In addition, one predetermined reference image is stored (or input) in the controller 40 by a user, and comparative images obtained through the vision cameras 31 of the detection part 30 are transmitted to the controller 40. Therefore, in the present disclosure, the comparative images may be compared with the previously stored reference image and a matching rate between the images may be calculated to determine whether the release paper 200 is present on the surface of the battery cell 100. For example, in a case where the release paper 200 is not partially or completely removed from the surface of the battery cell 100, when the matching rate is less than a preset reference value, it is determined that the release paper 200 is not completely removed from the battery cell 100 and a warning sound is output, or the defective battery cell 100 is removed to be prevented from being moved to a subsequent process.

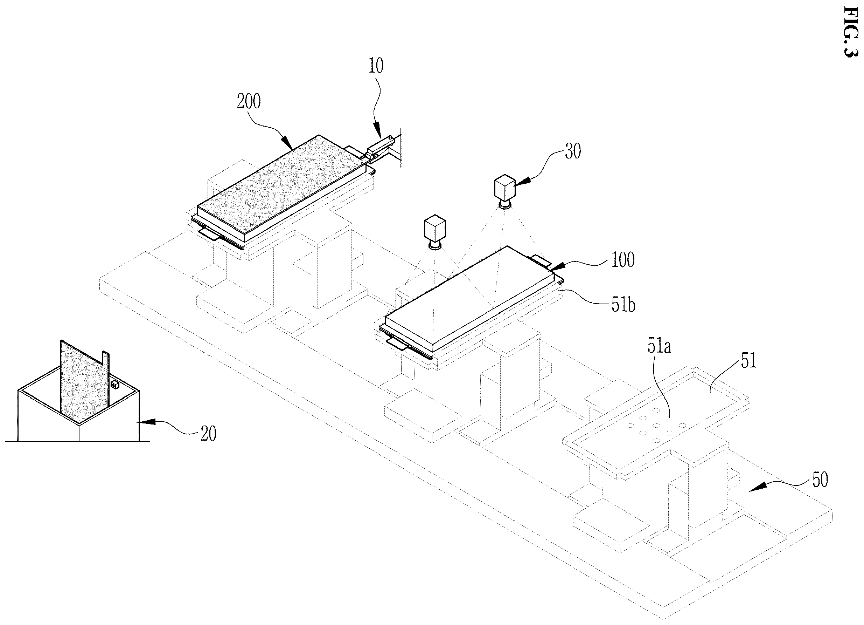

As illustrated in FIG. 3, the apparatus for removing the release paper according to the present disclosure may include a transfer carrier 50. The battery cell 100 may be mounted on the transfer carrier 50 and then sequentially enter the removal part 10 and the detection part 30 described above.

The transfer carrier 50 may fix the battery cell 100 in position on a support 51 running along a guide rail (not indicated by reference numerals) extending along a traveling direction of the battery cell 100. After that, in the present disclosure, the release paper of the battery cell 100 may be removed using the transfer carrier 50, non-removal of the release paper 200 may be detected, and then the battery cell may be guided to downstream equipment. Optionally, the support 51 may travel at a constant speed along an extending direction of the guide rail.

In the present disclosure, in order to prevent the battery cell 100 from being moved or separated from the support 51 while the battery cell 100 travels along the extending direction of the guide rail or the release paper 200 is removed from the battery cell 100, the battery cell 100 and the support 51 may be fixed to each other by a vacuum method. The support 51 is provided with a plurality of vacuum ports 51a on an upper surface thereof facing the battery cell 100. The vacuum ports 51a are connected to a vacuum pump (not illustrated). The battery cell 100 may be disposed on the vacuum ports 51a of the support 51 and vacuum-adsorbed and fixed in position to the upper surface of the support 51 by driving the vacuum pump.

Of course, the support 51 may clamp or release the battery cell 100 through a clamp 51b, but the present disclosure is not limited thereto and various fixing methods may be used.

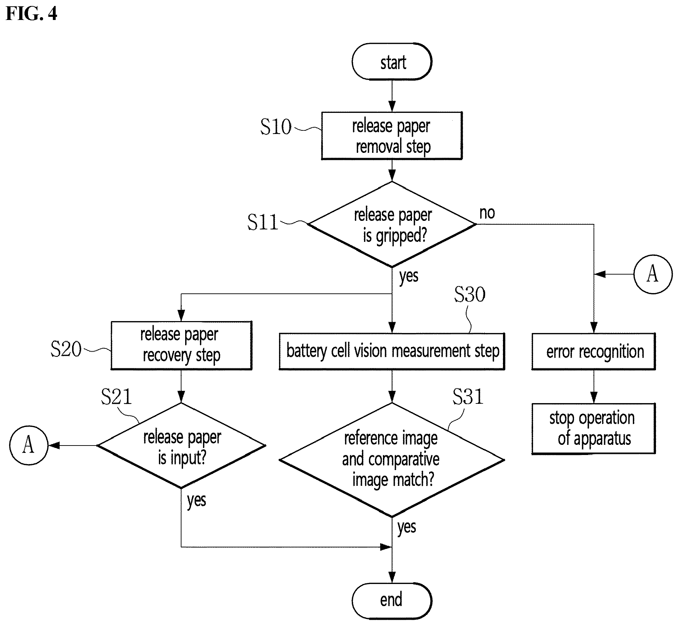

Hereinafter, a method of removing release paper by detecting non-removal of the release paper while removing the release paper by using the apparatus having the above-described configuration will be described in detail with reference to FIG. 4.

### Release paper removal step S10

In the present disclosure, release paper 200 attached to a battery cell 100 may be removed using a removal part 10 of the apparatus for removing the release paper (see FIGS. 1 and 2) (S10).

In the release paper removal step S10, while the release paper 200 attached to the battery cell 100 is gripped by a pair of fingers 11a and 11b of a gripper 11, the release paper 200 may be removed by moving the gripper 11 in a removal direction on the battery cell 100.

In the present disclosure, while removing the release paper 200 with the gripper 11, specifically the pair of fingers 11a and 11b, whether the release paper 200 is gripped may be determined by a gripping detection sensor 12, which is composed of a light emitting element 12a and a light receiving element 12b respectively installed on the pair of fingers 11a and 11b (S11). When the release paper 200 between the pair of fingers 11a and 11b is not detected on the basis of a detection signal transmitted from the gripping detection sensor 12, a controller 40 may recognize this as an error and stop the operation of the apparatus.

On the other hand, when the release paper 200 between the pair of fingers 11a and 11b is detected, it may be determined that the release paper 200 is smoothly removed from the battery cell 100 by the removal part 10. Therefore, in the present disclosure, the removed release paper 200 may be recovered (S20) and the battery cell 100 may be measured with vision cameras 31 (S30).

### Release paper recovery step S20

In the present disclosure, the release paper 200 may be removed from a surface of the battery cell through the gripper 11 of the removal part 10, and the removed release paper 200 may be collected in separate equipment, that is, a recovery part 20 (S20).

As illustrated in FIG. 1, the gripper 11 removes the release paper 200 from the surface of the battery cell 100 while being moved toward the recovery part 20 with the release paper 200 gripped thereon, and then releases the removed release paper 200 above an inlet 21 of the recovery part 20 and helps it to be easily recovered into the recovery part 20.

Preferably, an input detection sensor 22 of the recovery part 20 is disposed at the inlet 21 open upwardly. Therefore, in the present disclosure, inputting of the release paper 200 into the recovery part 20 may be accurately detected through the input detection sensor 22 (S21). When the release paper 200 input into the recovery part 20 through an opening of the inlet 21 is not detected on the basis of a detection signal transmitted from the input detection sensor 22, the controller 40 may recognize this as an error and stop the operation of the apparatus.

Of course, when the release paper 200 is input into the recovery part through the opening of the inlet 21, it may be determined that the release paper 200 removed from the battery cell 100 is reliably recovered. In practice, in the present disclosure, removal of the release paper 200 may be determined through recovery of the removed release paper 200.

### Battery cell vision measurement step S30

In the present disclosure, vision measurement on the surface of the battery cell 100 may be performed (S30) after the release paper removal step S10. As widely known to those skilled in the art, the battery cell 100 is placed on a transfer carrier 50, and the recovery part 10 and a detection part 30 sequentially enter to remove the release paper 200 while detecting release paper 200 remaining not removed on the surface of the battery cell 100.

In the process of removing the release paper 200 from the battery cell 100, when the release paper 200 is not firmly gripped by the gripper 11 or is tom, the release paper may not be removed partially or completely. Therefore, in the present disclosure, the release paper 200 remaining not removed on the surface of the battery cell 100 may be finally detected (S30).

Specifically, in the present disclosure, the surface of the battery cell 100 for which the release paper removal step S10 is completed may be captured using the vision cameras 31. The controller 40 receives comparative images of the battery cell 100 captured by the vision cameras 31 and compares a matching rate between the comparative images and a reference image of the battery cell 100 previously stored in the controller 40 (S31). When the matching rate is less than a preset value, it may be determined that the release paper 200 is not completely removed from the battery cell 100, and the operation of the apparatus may be stopped.

When the matching rate is equal to or greater than the preset value, the battery cell 100 may be moved to a subsequent process, for example, a process of stacking battery cells with release paper removed.

Of course, the apparatus for removing the release paper according to the embodiment of the present disclosure may perform the release paper recovery step and the battery cell vision measurement step sequentially or simultaneously after the above-described release paper removal step, but the present disclosure is not limited thereto.

While the present disclosure has been described in detail with embodiments thereof, such embodiments are illustrative and are not given as limitations. The embodiments are only examples of the present disclosure, and it will be understood by those skilled in the art that the present disclosure can be modified or changed in various forms without departing from the technical spirit of the present disclosure.

Simple modifications or changes of the present disclosure belong to the scope of the present disclosure, and the detailed scope of the present disclosure will be more clearly understood by the accompanying claims.

## Claims

1. An apparatus for removing release paper, the apparatus comprising:
a removal part including a gripper configured to grip and remove release paper attached to a surface of a battery cell, and
a gripping detection sensor provided on the gripper and configured to detect gripping of the release paper.

2. The apparatus of claim 1, further comprising:
a detection part configured to detect the release paper remaining not removed on the surface of the battery cell.

3. The apparatus of claim 2, wherein the detection part includes one or more vision cameras configured to capture the entire surface of the battery cell.

4. The apparatus of claim 1, further comprising:
a recovery part configured to recover the release paper removed from the surface of the battery cell.

5. The apparatus of claim 4, wherein the recovery part includes:
an inlet having an open structure that allows the removed release paper to be input therethrough; and
an input detection sensor provided at the inlet and configured to detect input of the removed release paper.

6. The apparatus of claim 1, wherein the gripper includes:
a pair of fingers configured to grip and release the release paper;
a light emitting element located on one of the pair of fingers; and
a light receiving element located on the remaining one of the pair of fingers and configured to receive light emitted from the light emitting element.

7. The apparatus of claim 1, wherein the release paper includes a gripping protrusion extending outwardly from an edge of the release paper, and
an intersection area between the release paper and the gripping protrusion is formed to be rounded.

8. The apparatus of claim 1, further comprising:
a transfer carrier configured to be movable by mounting the battery cell thereon.

9. A method of removing release paper, the method comprising:
removing release paper attached to a surface of a battery cell by gripping the release paper with a gripper; and
determining whether the release paper is gripped through the gripper.

10. The method of claim 9, further comprising:
after the removing of the release paper,
recovering the release paper removed from the surface of the battery cell; and
determining whether the removed release paper is input into a recovery part.

11. The method of claim 9, further comprising:
after the removing of the release paper,
performing vision measurement on the surface of the battery cell; and
comparing a reference image of the surface of the battery cell with the release paper completely removed and a comparative image obtained in the performing of the vision measurement to determine whether the images match each other.
